# DEMANDE DE BREVET EUROPEEN

(11) **EP 1 705 915 A1**
(43) Date de publication de la demande: **27.09.2006**
(21) Numéro de dépôt: 05102306.7
(22) Date de dépôt: 22.03.2005
(51) Int. Cl.: H04N 7/167

(54) **Procédé de gestion de l'accès à des données à accès conditionnel pour un zapping rapide**

(71) Demandeur: Nagravision S.A., 1033 Cheseaux-sur-Lausanne (CH)
(72) Inventeur: Stransky, Philippe, 1033 Cheseaux-sur-Lausanne (CH)
(74) Mandataire: Wenger, Joel-Théophile

(57) **Abrégé**

L'invention concerne un procédé de gestion de l'accès à des données à accès conditionnel dans lequel des données sont diffusées sur une pluralité de canaux à destination d'une unité multimédia d'au moins un abonné. Ces données nécessitent l'utilisation d'au moins une clé de déchiffrement pour être accessibles. Le procédé de l'invention comporte les étapes de :
-réception par ladite unité multimédia d'au moins un flux de données (CT) chiffrées diffusées sur un canal déterminé, dit canal actuel (Cᵢ);
-réception d'un flux de messages de contrôle (ECMᵢ) contenant des informations (CW) permettant de déchiffrer les données dudit flux de données chiffrées;
-vérification des droits dudit abonné d'accéder aux données chiffrées;
-en cas d'existence des droits d'accès aux données chiffrées, traitement du flux de messages de contrôle (ECMᵢ) de façon à en extraire les informations (CW) de déchiffrement des données (CT) chiffrées;
-établissement d'une liste ordonnée des canaux accessibles par ledit abonné;
-réception d'un flux de messages de contrôle (ECMᵢ₋₁; ECMᵢ₊₁) contenant des informations permettant de déchiffrer les données d'un flux de données chiffrées correspondant à au moins un canal (Cᵢ₋₁; Cᵢ₊₁) adjacent, selon la liste ordonnée des canaux accessibles par ledit abonné, au canal actuel (Cᵢ)
-traitement dudit flux de messages de contrôle (ECMᵢ₋₁; ECMᵢ₊₁) de façon à en extraire lesdites informations (CW) permettant de déchiffrer les données d'un flux de données chiffrées et stockage de ces informations.

## Description

### DOMAINE TECHNIQUE

La présente invention concerne un procédé de gestion de l'accès à des données à accès conditionnel, ces données étant en particulier des données de télévision à péage.

Elle concerne plus particulièrement un procédé permettant de minimiser les temps morts lors de changement de canaux, c'est-à-dire les durées pendant lesquelles des données ne sont pas accessibles suite à un changement de canal de la part d'un abonné ou d'un utilisateur.

### TECHNIQUE ANTERIEURE

Lorsqu'un utilisateur de télévision à péage regarde un événement sur un canal déterminé, ces données doivent être déchiffrées pour pouvoir être affichées sur un écran. Lorsque cet utilisateur change de canal, un certain nombre d'opérations se produisent avant de pouvoir afficher les nouvelles données à l'écran. Ces opérations sont les suivantes :
- acquisition de données en quantité suffisante pour former au moins une image;
- acquisition, pour les événements chiffrés, d'informations, sous forme de messages de contrôle, nécessaires au déchiffrement de l'événement;
- vérification de l'adéquation entre les conditions d'accès à l'événement et les droits d'accès de l'abonné;
- déchiffrement des messages de contrôle pour un extraire une clé de déchiffrement des données;
- déchiffrement du contenu au moyen de la clé de déchiffrement.

La réalisation de ces opérations nécessite un temps qui peut être relativement important. Pendant ce temps, l'événement n'est pas affiché à l'écran, ce qui est désagréable pour l'abonné.

Certains systèmes connus essayent de réduire ce temps mort en préparant à l'avance les informations probablement nécessaires lors d'un prochain changement de canal. Par exemple, dans des systèmes de télévision par câble ou par satellite, tous les messages de contrôle d'un flux de transport donné sont déchiffrés simultanément. Ainsi, les clefs de déchiffrement sont immédiatement disponibles lors d'un prochain changement de canal. Cette réalisation nécessite un ordonnancement des canaux de manière à les répartir séquentiellement sur les flux de transports. Cette optimisation ne peut toutefois pas être faite lorsque deux canaux adjacents ne se trouvent pas sur le même flux de transport.

### EXPOSE DE L'INVENTION

La présente invention se propose de pallier les inconvénients des procédés de l'art antérieur en réalisant un procédé permettant de réduire au minimum les temps morts lors de changement de canaux. Ce procédé fonctionne aussi bien dans le cadre de la télévision à péage utilisant un réseau du type Internet (réseau IP) que dans un système de télévision par satellite, par câble ou numérique terrestre. Ce procédé peut en outre également être utilisé dans toutes applications de transfert de données chiffrées.

Les buts de l'invention sont atteints par un procédé de gestion de l'accès à des données à accès conditionnel dans lequel des données sont diffusées sur une pluralité de canaux à destination d'une unité multimédia d'au moins un abonné, ces données nécessitant l'utilisation d'au moins une clé de déchiffrement pour être accessibles, ce procédé comportant les étapes de :
- réception par ladite unité multimédia d'au moins un flux de données (CT) chiffrées diffusées sur un canal déterminé, dit canal actuel (Cᵢ);
- réception d'un flux de messages de contrôle (ECMᵢ) contenant des informations (CW) permettant de déchiffrer les données dudit flux de données chiffrées;
- vérification des droits dudit abonné d'accéder aux données chiffrées;
- en cas d'existence des droits d'accès aux données chiffrées, traitement du flux de messages de contrôle (ECMᵢ) de façon à en extraire les informations (CW) de déchiffrement des données (CT) chiffrées;
- établissement d'une liste ordonnée des canaux accessibles par ledit abonné;
- réception d'un flux de messages de contrôle (ECMᵢ₋₁; ECMᵢ₊₁) contenant des informations permettant de déchiffrer les données d'un flux de données chiffrées correspondant à au moins un canal (Cᵢ₋₁; Cᵢ₊₁) adjacent, selon la liste ordonnée des canaux accessibles par ledit abonné, au canal actuel (Cᵢ)
- traitement dudit flux de messages de contrôle (ECMᵢ₋₁; ECMᵢ₊₁) de façon à en extraire lesdites informations (CW) permettant de déchiffrer les données d'un flux de données chiffrées et stockage de ces informations.

### DESCRIPTION SOMMAIRE DES DESSINS

La présente invention et ses avantages seront mieux compris en référence à la figure annexée et à la description détaillée d'un mode de réalisation particulier, dans lesquelles :

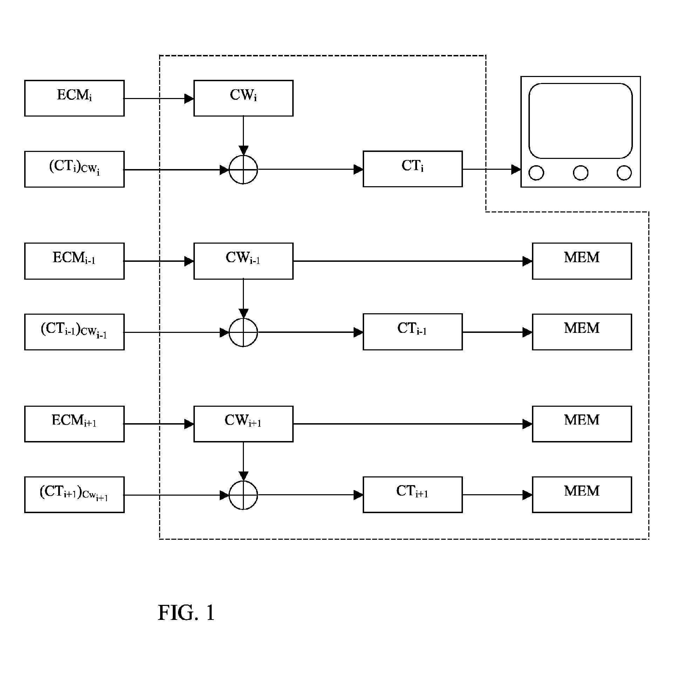

- la figure 1 représente de façon schématique le procédé de l'invention.

### MANIERES DE REALISER L'INVENTION

En référence à la figure 1, le procédé de l'invention se déroule dans un système de télévision à péage conventionnel, dans lequel des données CT, chiffrées par des mots de contrôle CW sont envoyées à des unités multimédia d'utilisateurs ou d'abonnés. Des messages de contrôle ECM, contenant les mots de contrôle CW sous forme chiffrée, sont également envoyés aux abonnés. Des messages d'autorisation EMM, contenant des droits d'accès, sont utilisés pour attribuer des droits aux abonnés.

Les abonnés disposent d'une unité multimédia formée d'un décodeur associé à un module de sécurité. De façon bien connue de l'homme du métier, le module de sécurité peut être réalisé essentiellement selon quatre formes distinctes. L'une d'elles est une carte à microprocesseur, une carte à puce, ou plus généralement un module électronique (ayant une forme de clé, de badge,...). Un tel module est généralement amovible et connectable au décodeur. La forme avec contacts électriques est la plus utilisée, mais n'exclut pas une liaison sans contact par exemple de type ISO 14443.

Une deuxième forme connue est celle d'un boîtier de circuit intégré placé, généralement de façon définitive et inamovible dans le boîtier du décodeur. Une variante est constituée d'un circuit monté sur un socle ou connecteur tel qu'un connecteur de module SIM.

Dans une troisième forme, le module de sécurité est intégré dans un boîtier de circuit intégré ayant également une autre fonction, par exemple dans un module de désembrouillage du décodeur ou le microprocesseur du décodeur.

Dans une quatrième forme de réalisation, le module de sécurité n'est pas réalisé sous forme matérielle, mais sa fonction est mise en oeuvre sous forme uniquement logicielle. Etant donné que dans les quatre cas, bien que le niveau de sécurité diffère, la fonction est identique, on parlera de module de sécurité quelle que soit la manière de réaliser sa fonction ou la forme que peut prendre ce module.

Lorsqu'un décodeur d'un abonné reçoit des données chiffrées correspondant à un événement, il reçoit également un flux de messages de contrôle ECM. Le décodeur vérifie tout d'abord si le message de contrôle ECM lui est destiné. Si tel est le cas, il le transmet au module de sécurité qui vérifie s'il dispose des droits pour accéder à l'événement considéré. En cas de réponse positive, le module de sécurité déchiffre le message de contrôle ECM pour en extraire le mot de contrôle CW. Celui-ci est transmis au décodeur qui l'utilise pour déchiffrer le contenu et afficher l'événement sur l'écran du téléviseur.

Le procédé selon l'invention comporte, de façon conventionnelle, les étapes décrites ci-dessus. Il comporte en outre les étapes suivantes. Dans un premier temps, il est établi une liste ordonnée des canaux accessibles par l'abonné.

Pour établir cette liste, le décodeur de l'abonné reçoit différents flux de messages de contrôle et de données, correspondant à différents canaux. Pour les flux de chaque canal, le décodeur vérifie s'il dispose des droits d'accès à ce canal. Si tel est le cas, le décodeur détermine un identifiant pour le canal considéré et mémorise cet identifiant. II procède ainsi pour tous les canaux reçus. Si l'abonné ne dispose pas des droits pour un canal déterminé, l'identifiant de ce canal n'est pas mémorisé dans la liste.

La liste ainsi établie est ordonnée en fonction de numéros de canaux. Ces numéros de canaux peuvent être attribués par un centre de gestion ou un diffuseur de contenu de télévision à péage. Les numéros pourraient également être attribués par l'abonné lui-même, en fonction d'un ordre de programmation des canaux sur son téléviseur. Cette liste comprend donc tous les canaux pour lesquels l'abonné dispose des droits d'accès et uniquement ceux-ci.

Il est clair que la liste ordonnée peut être différente pour chaque utilisateur ou commune pour un groupe d'utilisateurs.

Dans un deuxième temps, lorsque la liste ordonnée est établie, elle est mémorisée dans le décodeur. Cette liste est mise à jour à chaque changement de droits d'accès, par exemple lorsque l'abonné acquiert des droits pour un nouveau canal ou renonce à l'abonnement à un canal déterminé ou par exemple lorsque e contenu d'un bouquet auquel l'abonné a accès est modifié.

Cette liste peut être transférée du module de sécurité au décodeur lors de chaque changement, selon des intervalles temporels réguliers et/ou à chaque enclenchement du décodeur par exemple.

Selon une variante, la liste ordonnée peut être préparée dans un centre de gestion pour chaque abonné ou groupe d'abonné, puis être transmise aux décodeurs concernés.

Lorsque le décodeur reçoit un flux de données CT chiffrées, il reçoit également le flux de messages de contrôle ECM correspondant. Lorsque l'abonné regarde un événement sur un canal Cᵢ donné, il reçoit le flux correspondant ECMᵢ.

Selon l'invention, le décodeur détermine, d'après la liste ordonnée des canaux accessibles, quels sont les deux canaux adjacents auxquels l'abonné a accès. Ces canaux sont notés Cᵢ₋₁ pour le canal précédent et Cᵢ₊₁ pour le canal suivant. Les flux de messages de contrôle ECMᵢ₋₁ et ECMᵢ₊₁ correspondants sont transmis au module de sécurité lorsqu'ils sont reçus par le décodeur. Ils sont alors traités de façon à en extraire les mots de contrôle CWᵢ₋₁ et CWᵢ₊₁ correspondants. Ces mots de contrôle sont transmis au décodeur, généralement sous forme chiffrée. Contrairement aux mots de contrôle correspondants au canal actuel Cᵢ qui est affiché sur l'écran de l'abonné, les mots de contrôle CWᵢ₋₁ et CWᵢ₊₁ des canaux adjacents ne sont pas utilisés jusqu'au moment où l'abonné change de canal. Ils sont donc mémorisés dans une mémoire du décodeur. Lorsque les mots de contrôle changent, c'est-à-dire après une crypto-période, deux nouveaux messages de contrôle ECMᵢ₋₁ et ECMᵢ₊₁ sont traités de façon à en extraire les nouveaux mots de contrôle CWᵢ₋₁ et CWᵢ₊₁ et à les mémoriser dans le décodeur.

Lorsque l'abonné change de canal, les étapes d'acquisition de messages de contrôle, de vérification de l'adéquation entre les conditions d'accès à l'événement et les droits d'accès de l'abonné et de déchiffrement des messages de contrôle pour un extraire une clé de déchiffrement des données sont déjà effectuées. De cette manière, le temps de traitement nécessaire jusqu'à l'affichage des données du nouveau canal est nettement réduit. Le décodeur dispose donc toujours des mots de contrôle CWᵢ₋₁ pour le canal précédent, CWᵢ pour le canal actuel et CWᵢ₊₁ pour le canal suivant.

Selon les méthodes actuellement utilisées pour diffuser des événements de télévision à péage, le contenu CT et les messages de contrôle ECM contenant les mots de contrôle CW sont contenus dans le même flux de transport. II en résulte que pour recevoir les messages de contrôle ECM, il faut également recevoir le flux du contenu audio/vidéo. Selon une variante de l'invention, il est proposé de séparer le flux du contenu et le flux des messages de contrôle ECM. Ceci est particulièrement intéressant du fait que ceci permet de recevoir les messages de contrôle ECMᵢ₋₁ du canal précédent Cᵢ₋₁ et ECMᵢ₊₁ du canal suivant Cᵢ₊₁ sans recevoir les données correspondant à ces canaux et donc sans occuper de la bande passante pour les données de ces deux canaux, alors que ces données ne sont en fait que rarement utiles. Cette variante permet donc une importante économie de bande passante.

Une manière complémentaire d'économiser de la bande passante consiste à diffuser les messages de contrôle ECMᵢ₋₁ et ECMᵢ₊₁ des canaux adjacents à une fréquence inférieure à la fréquence de diffusion des messages de contrôle ECMᵢ du canal actuel Cᵢ. De façon bien connue, même si la crypto-période est de plusieurs secondes, les messages de contrôle ECM sont répétés plusieurs fois par seconde. Une telle configuration n'est pas indispensable pour ce qui concerne les messages de contrôle des canaux adjacents. Il est donc possible de les envoyer à des fréquences moindres.

Dans l'invention telle que décrite ci-dessus, un certain nombre d'étapes indispensables pour l'accès au contenu diffusé sont réalisées par avance pour les canaux adjacents au canal actuel, c'est-à-dire avant que ces étapes soient réellement requises pour l'accès à des données. Afin d'améliorer encore le procédé et donc de réduire le temps mort lors du changement de canal, il est également possible de réaliser par avance l'étape d'acquisition de données nécessaires pour former une image. Pour ceci, le contenu des canaux adjacents au canal actuel est reçu par le décodeur et mémorisé dans une mémoire de celui-ci ou dans un équipement auxiliaire à ce décodeur. Ainsi, lorsque l'utilisateur change de canal pour afficher les données du canal suivant ou précédent, des données sont déjà disponibles de même que le mot de contrôle correspondant. La seule étape qui doit encore être réalisée est le déchiffrement des données par le mot de contrôle. Cette étape ne nécessite qu'un temps très court, de sorte que les données peuvent être affichées à l'écran de façon très rapide lors du changement de canal vers le canal suivant ou le canal précédent.

La description ci-dessus se base sur l'acquisition de données relatives au canal précédent et au canal suivant par rapport au canal actuel. Il est clair qu'en fonction de la bande passante disponible, il est possible d'acquérir des données relatives par exemple aux deux canaux précédents et aux deux canaux suivants ou éventuellement à plus de canaux.

La liste des canaux accessibles par l'abonné peut être considérée comme une "boucle" et non comme un "segment" dans le sens que le canal précédent le premier canal de la liste est le dernier canal de cette liste, de sorte que chaque canal a deux canaux adjacents.

## Revendications

1. Procédé de gestion de l'accès à des données à accès conditionnel dans lequel des données sont diffusées sur une pluralité de canaux à destination d'une unité multimédia d'au moins un abonné, ces données nécessitant l'utilisation d'au moins une clé de déchiffrement pour être accessibles, ce procédé comportant les étapes de :
- réception par ladite unité multimédia d'au moins un flux de données (CT) chiffrées diffusées sur un canal déterminé, dit canal actuel (Cᵢ);
- réception d'un flux de messages de contrôle (ECMᵢ) contenant des informations (CW) permettant de déchiffrer les données dudit flux de données chiffrées;
- vérification des droits dudit abonné d'accéder aux données chiffrées;
- en cas d'existence des droits d'accès aux données chiffrées, traitement du flux de messages de contrôle (ECMᵢ) de façon à en extraire les informations (CW) de déchiffrement des données (CT) chiffrées;
- établissement d'une liste ordonnée des canaux accessibles par ledit abonné;
- réception d'un flux de messages de contrôle (ECMᵢ₋₁; ECMᵢ₊₁) contenant des informations permettant de déchiffrer les données d'un flux de données chiffrées correspondant à au moins un canal (Cᵢ₋₁; Cᵢ₊₁) adjacent, selon la liste ordonnée des canaux accessibles par ledit abonné, au canal actuel (Cᵢ)
- traitement dudit flux de messages de contrôle (ECMᵢ₋₁; ECMᵢ₊₁) de façon à en extraire lesdites informations (CW) permettant de déchiffrer les données d'un flux de données chiffrées et stockage de ces informations.

2. Procédé de gestion de l'accès à des données selon la revendication 1, **caractérisé en ce que** l'établissement de la liste des canaux accessibles comporte les étapes de :
- réception d'un flux de messages de contrôle (ECMᵢ₋₁; ECMᵢ₊₁) contenant des informations (CW) permettant de déchiffrer les données dudit flux de données chiffrées;
- vérification des droits dudit abonné d'accéder aux données chiffrées;
- en cas d'existence des droits d'accès aux données chiffrées, détermination du canal (Cᵢ₋₁; Cᵢ₊₁) sur lequel ledit flux de données est diffusé, et mémorisation d'un identifiant dudit canal dans la liste ordonnée des canaux accessibles par l'abonné;
- au cas où les droits d'accès ne sont pas présents, l'identifiant du canal n'est pas inscrit dans la liste des canaux accessibles.

3. Procédé de gestion de l'accès à des données selon la revendication 1 ou 2, **caractérisé en ce que** lesdits canaux adjacents (Cᵢ₋₁; Cᵢ₊₁) correspondent au canal suivant et au canal précédent de la liste ordonnée des canaux accessibles par ledit abonné.

4. Procédé de gestion de l'accès à des données selon l'une quelconque des revendications précédentes, dans lequel l'unité multimédia comprend un décodeur et un module de sécurité, **caractérisé en ce que** l'étape de vérification des droits comporte une étape d'extraction de l'identifiant de canal (Cᵢ) du flux de messages de contrôle (ECMᵢ) et une étape de comparaison de cet identifiant de canal avec des identifiants correspondant aux canaux accessibles par ledit abonné et stockés dans le décodeur.

5. Procédé de gestion de l'accès à des données selon l'une quelconque des revendications précédentes, **caractérisé en ce que** la liste des canaux est ordonnée en fonction de numéros de canaux.

6. Procédé de gestion de l'accès à des données selon l'une quelconque des revendications 1 à 4, **caractérisé en ce que** la liste ordonnée des canaux est transmise à l'unité multimédia de l'abonné par un centre de gestion.

7. Procédé de gestion de l'accès à des données selon l'une quelconque des revendications précédentes, **caractérisé en ce que** les données relatives à deux canaux adjacents sont dans des flux de transports différents.

8. Procédé de gestion de l'accès à des données selon l'une quelconque des revendications précédentes, **caractérisé en ce que** le flux des messages de contrôle (ECM) est différent du flux de données (CT) chiffrées.

9. Procédé de gestion de l'accès à des données selon la revendication 1, **caractérisé en ce qu'**il comporte une étape de mémorisation de données (CT) diffusées sur au moins un canal adjacent (Cᵢ₋₁; Cᵢ₊₁) au canal actuel (Cᵢ) sur la liste ordonnée des canaux accessibles par ledit abonné.

10. Procédé de gestion de l'accès à des données selon l'une quelconque des revendications précédentes, **caractérisé en ce** les messages de contrôle (ECMᵢ) correspondant au canal actuel (Cᵢ) sont envoyés à une fréquence différente de la fréquence d'envoi des messages de contrôle (ECMᵢ₋₁; ECMᵢ₊₁) pour les canaux adjacents (Cᵢ₋₁; Cᵢ₊₁).
